# EUROPEAN PATENT APPLICATION

(11) **EP 3 742 836 A1**
(43) Date of publication of application: **25.11.2020**
(21) Application number: 18901285.9
(22) Date of filing: 17.01.2018
(51) Int. Cl.: H04W 72/04

(54) **USER TERMINAL AND WIRELESS COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); GUO, Shaozhen, Beijing 100190 (CN); WANG, Lihui, Beijing 100190 (CN); HOU, Xiaolin, Beijing 100190 (CN)
(74) Representative: Hoffmann Eitle
(86) International application number: PCT/JP2018/001246
(87) International publication number: WO 2019/142272

(57) **Abstract**

Even when a plurality of numerologies are used, monitoring of a downlink control channel is appropriately controlled. A user terminal includes: a reception section that receives a downlink control channel; and a control section that controls monitoring of the downlink control channel by using a periodicity and an offset of a start timing associated with a subcarrier spacing.

## Description

### Technical Field

The present disclosure relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for a larger capacity and higher sophistication than those of LTE (LTE Rel. 8 and 9), LTE-Advanced (LTE-A and LTE Rel. 10, 11, 12 and 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) have been also studied.

A base station controls allocation (scheduling) of data to a user terminal (UE: User Equipment). The base station notifies the UE of Downlink Control Information (DCI) indicating a scheduling instruction of data by using a downlink control channel (e.g., Physical Downlink Control Channel (PDCCH)).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It has been studied for a future radio communication system (e.g., NR) to use a plurality of numerologies (e.g., subcarrier spacings).

It has been studied to use a regular PDCCH and a Group Common (GC)-PDCCH. How to determine monitoring of these PDCCHs has not yet been studied.

There is a case where, unless a method for appropriately controlling monitoring of a PDCCH is established, a throughput lowers.

It is therefore one of objects of the present disclosure to provide a user terminal and a radio communication method that can appropriately control monitoring of a downlink control channel even when a plurality of numerologies are used.

### Solution to Problem

A user terminal according to one aspect of the present disclosure includes: a reception section that receives a downlink control channel; and a control section that controls monitoring of the downlink control channel by using a periodicity and an offset of a start timing associated with a subcarrier spacing.

### Advantageous Effects of Invention

According to one aspect of the present disclosure, it is possible to appropriately control monitoring of a downlink control channel even when a plurality of numerologies are used.

### Brief Description of Drawings

Fig. 1 is a diagram illustrating one example of monitoring occasions.
Fig. 2 is a diagram illustrating one example of a relationship between an SCS, a monitoring periodicity and a monitoring offset.
Fig. 3 is a diagram illustrating one example of monitoring that uses a monitoring periodicity and a slot offset.
Fig. 4 is a diagram illustrating one example of monitoring that uses a monitoring periodicity, a slot offset and a symbol offset.
Fig. 5 is a diagram illustrating one example of monitoring that uses a monitoring periodicity, a slot offset, a symbol offset and a duration.
Fig. 6 is a diagram illustrating one example of a parameter set.
Figs. 7A and 7B are diagrams respectively illustrating one example of GC-PDCCH parameter sets for 15 kHz and 30 kHz in SCS.
Figs. 8A and 8B are diagrams respectively illustrating one example of GC-PDCCH parameter sets for 60 kHz and 120 kHz in SCS.
Fig. 9 is a diagram illustrating one example of a GC-PDCCH parameter set.
Fig. 10 is a diagram illustrating another example of the GC-PDCCH parameter set.
Figs. 11A and 11B are diagrams respectively illustrating one example of common parameter sets for 15 kHz and 30 kHz in SCS.
Figs. 12A and 12B are diagrams respectively illustrating one example of common parameter sets for 60 kHz and 120 kHz in SCS.
Fig. 13 is a diagram illustrating one example of a common parameter set.
Fig. 14 is a diagram illustrating another example of the common parameter set.
Fig. 15 is a diagram illustrating one example of a schematic configuration of a radio communication system according to one embodiment.
Fig. 16 is a diagram illustrating one example of an overall configuration of a radio base station according to the one embodiment.
Fig. 17 is a diagram illustrating one example of a function configuration of the radio base station according to the one embodiment.
Fig. 18 is a diagram illustrating one example of an overall configuration of a user terminal according to the one embodiment.
Fig. 19 is a diagram illustrating one example of a function configuration of the user terminal according to the one embodiment.
Fig. 20 is a diagram illustrating one example of hardware configurations of the radio base station and the user terminal according to the one embodiment.

### Description of Embodiments

For a future radio communication system (that is, for example, at least one of NR, 5G and 5G+ and will be referred to simply as NR), a downlink control channel for conveying Downlink Control Information (DCI) has been studied.

A UE monitors (that may be referred to as blind-decode) one or a plurality of Control Resource Sets (CORESETs) configured to the own terminal, and detects the downlink control information.

DCI for scheduling reception of DL data (e.g., a downlink shared channel (PDSCH: Physical Downlink Shared Channel)) and/or measurement of a DL reference signal may be referred to as a DL assignment, a DL grant or DL DCI. DCI for scheduling transmission of UL data (e.g., an uplink shared channel (PUSCH: Physical Uplink Shared Channel) and/or transmission of a UL sounding (measurement) signal may be referred to as a UL grant or UL DCI.

According to NR, a PDCCH (that may be referred to as a UE-specific PDCCH or a regular PDCCH) for one UE, and, in addition, a PDCCH (that may be referred to as a Group Common PDCCH (GC-PDCCH) or a UE-group common PDCCH) that is common between one or more UEs have been studied as downlink control channels.

The "regular PDCCH" may represent a PDCCH for conveying DCI for scheduling a PDSCH and/or a PUSCH. The "regular PDCCH" may represent a PDCCH for conveying DCI for triggering measurement and report of an Aperiodic Sounding Reference Signal (A-SRS) and/or Aperiodic Channel State Information (A-CSI). The "regular PDCCH" may represent a PDCCH for conveying DCI for controlling (activating or releasing) Semi-Persistent Scheduling (SPS), UL-grant free transmission and/or Semi-Persistent CSI (SP-CSI).

The DCI conveyed on the GC-PDCCH may be referred to as a group-common DCI.

A representation of a "PDCCH" may be read as a "GC-PDCCH and/or a regular PDCCH" below.

It has been studied to make a periodicity of monitoring (a period or a monitoring periodicity) of the GC-PDCCH depend on a Subcarrier Spacing (SCS). For example, 1, 2, 5, 10 and 20 slots are supported for a 15 kHz SCS (a slot based on 15 kHz), 1, 2, 4, 5, 10 and 20 slots are supported for a 30 kHz SCS (a slot based on 30 kHz), 1, 2, 4, 5, 8, 10 and 20 slots are supported for a 60 kHz SCS (a slot based on 60 kHz), and 1, 2, 4, 5, 10 and 20 slots are supported for a 120 kHz SCS (a slot based on 120 kHz).

The monitoring periodicity may be configured to a UE by a higher layer. In the following description, the higher layer signaling may be one of, for example, a Radio Resource Control (RRC) signaling, a Medium Access Control (MAC) signaling (e.g., an MAC Control Element (MAC CE) or an MAC Protocol Data Unit (PDU)) or broadcast information (a Master Information Block (MIB) or a System Information Block (SIB)), or a combination of these. Furthermore, the physical layer signaling may be, for example, DCI.

Furthermore, following monitoring methods 1 and 2 for PDCCH monitoring have been studied.

Monitoring method 1: a monitoring periodicity equal to or more than 14 symbols

Following monitoring methods 1-1 and 1-2 have been studied for the monitoring method 1.

Monitoring method 1-1: PDCCH monitoring is performed in 3 or less Orthogonal Frequency Division Multiplexing (OFDM) symbols at a beginning of a slot.

Monitoring method 1-2: PDCCH monitoring is performed in an arbitrary range of 3 or less contiguous OFDM symbols in a slot. For a certain UE, all search space configurations may be arranged in an identical range of 3 or less contiguous OFDM symbols in a slot.

Monitoring method 2: A PDCCH monitoring periodicity of less than 14 symbols

PDCCH monitoring may be performed in 3 or less OFDM symbols at a beginning of a slot.

Furthermore, it has been also studied for NR to dynamically control a transmission direction (such as UL or DL) per symbol. For example, it has been studied to specify one or more slot formats by using information (also referred to as Slot Format related Information (SFI)) related to a slot format.

The slot format may indicate at least one of a transmission direction per given time (e.g., a given number of symbols) in a slot, a Guard Period (GP) and an unknown resource (that may be referred to as a reserved resource). The SFI may include information related to the number of slots to which the slot format is applied.

It has been studied to dynamically notify the UE of the SFI by using the GC-PDCCH. The GC-PDCCH may be referred to as an SFI-PDCCH or a DCI format 2_0.

It has been studied to configure 2 or less decoding candidates having a configured aggregation level in a Common Search Space (CSS) or a group Common Search Space (group CSS) in a configured CORESET for blind-decoding (blind-detection) of the GC-PDCCH that conveys the SFI.

Only configuring the monitoring periodicity to the GC-PDCCH cannot make it possible to determine a strict monitoring occasion. The monitoring occasion may be referred to as a monitoring window.

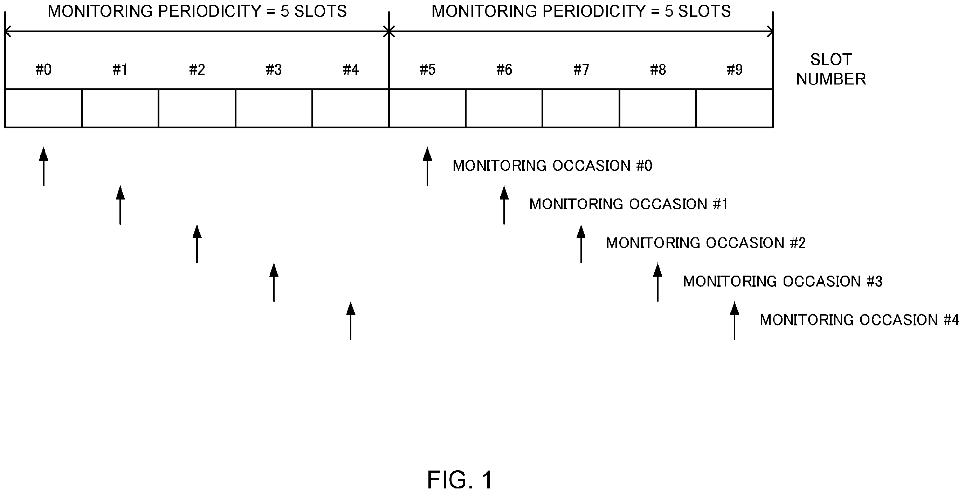

When, for example, the monitoring periodicity of the GC-PDCCH is configured to 5 slots as illustrated in Fig. 1, monitoring occasions #0 to #4 of different start timings in a slot unit are available. Hence, it is preferable to configure not only the monitoring periodicity but also a monitoring start timing.

There is a case where, unless a method for appropriately configuring monitoring occasions of a PDCCH is established, implementation complexity increases, power consumption increases and a throughput lowers.

Hence, the inventors of the present invention have conceived a method for appropriately configuring monitoring occasions of the PDCCH.

An embodiment according to the present disclosure will be described in detail below with reference to the drawings. A radio communication method according to each embodiment may be each applied alone or may be applied in combination.

A parameter indicating a monitoring configuration (monitoring occasion) may be configured to the UE. The monitoring occasion includes at least the monitoring periodicity. The UE may determine a time resource of monitoring according to the monitoring configuration. A parameter indicating the CORESET configuration may be configured to the UE. A parameter indicating one or a plurality of partial band (bandwidth part or BWP) configurations per Component Carrier (CC) may be configured to the UE. The UE may determine a frequency resource of monitoring based on a CORESET configuration and/or a BWP configuration.

An SCS (e.g., an SCS for the CORESET) may be configured to the UE. A parameter for determining the SCS may be notified to the UE by a higher layer signaling, or may be implicitly notified to the UE by other parameters.

### (Aspect 1)

According to aspect 1, an additional parameter is introduced to monitoring of a PDCCH (monitoring configuration).

Aspect 1 may be applied to monitoring of a regular PDCCH, or may be applied to monitoring of a GC-PDCCH. A parameter of monitoring of the regular PDCCH may be the same as or may be different from a parameter of monitoring of the

### GC-PDCCH.

Furthermore, following cases 1 and 2 are supposed for a CORESET on which a PDCCH is arranged.

Case 1: The CORESET starts from a first symbol in a slot.

In this case, a following case 1-1 and case 1-2 are supposed.

Case 1-1: The CORESET is over one OFDM symbol.

Case 1-2: The CORESET is over 3 or less OFDM symbols.

Case 2: The CORESET starts from one of symbols in a slot.

In this case, a following case 2-1 and case 2-2 are supposed.

Case 2-1 The CORESET is over one OFDM symbol.

Case 2-2: The CORESET is over 3 or less OFDM symbols.

At least one of following aspects 1-1, 1-2 and 1-3 may be applied to realize at least one of the above cases.

### <Aspect 1-1>

To determine a strict monitoring occasion (monitoring configuration) of a PDCCH in a specific periodicity, a monitoring offset (a slot offset or a monitoring slot offset) in a slot unit (slot level) is introduced. A range of a value of the slot offset may be from a 0 slot to (monitoring periodicity-1) slots.

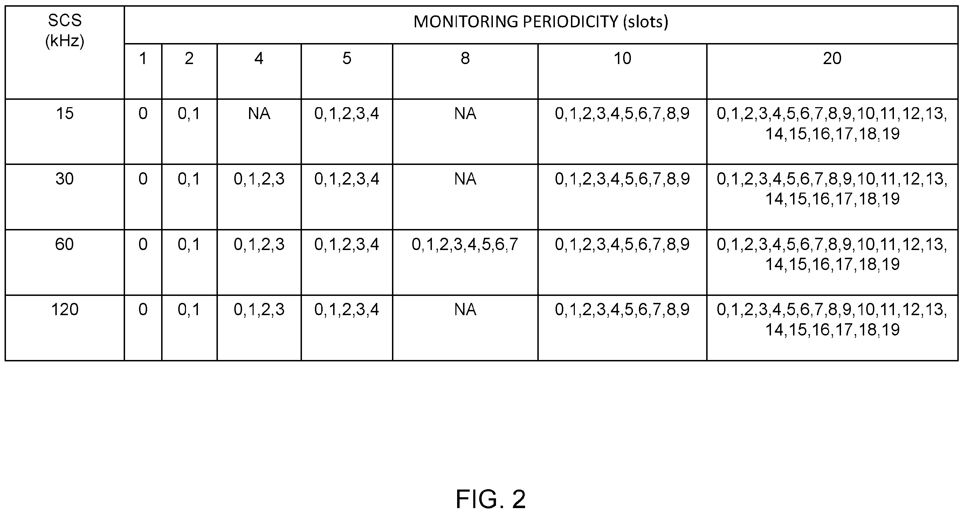

The monitoring offset of the PDCCH may depend on an SCS. As illustrated in a table in Fig. 2, monitoring periodicities and slot offsets may be supported for different SCSs.

A parameter for determining the monitoring periodicity may be configured to a UE. For example, a parameter (e.g., candidate index) indicating one of a plurality of candidates of the monitoring periodicity associated with the SCS in the table may be notified by a higher layer signaling, or a parameter associated with the monitoring periodicity may be notified. The UE may determine the monitoring periodicity based on the parameter for determining the monitoring periodicity.

A parameter for determining the slot offset may be configured to the UE. For example, a parameter (e.g., candidate index) indicating one of a plurality of candidates of the slot offset associated with the monitoring periodicity in the table may be notified by a higher layer signaling, or a parameter associated with the slot offset may be notified. The UE determines the slot offset based on the parameter for determining the slot offset.

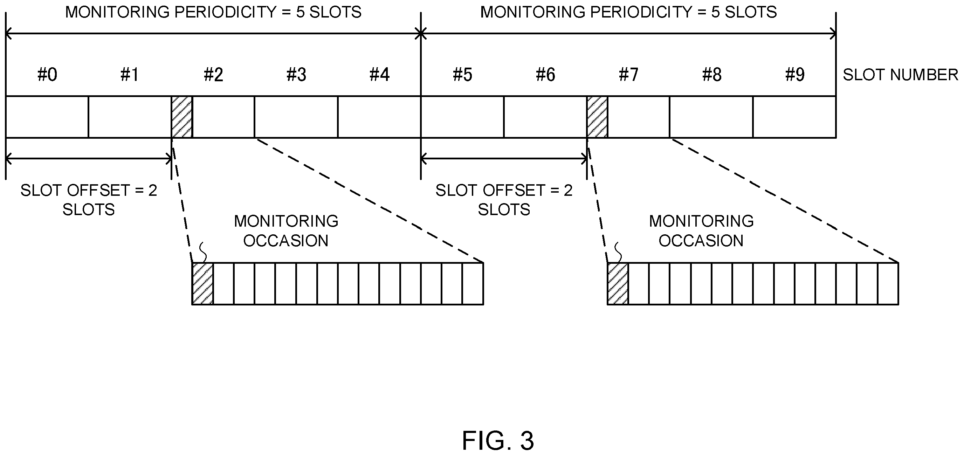

When the monitoring periodicity is configured to 5 slots and the slot offset is configured to 2 slot as illustrated in Fig. 3, the UE may recognize that the monitoring occasions are slots #2 and #7.

According to this aspect 1-1, the UE can specify a slot for performing monitoring in the monitoring periodicity.

### <Aspect 1-2>

To determine a monitoring occasion (monitoring configuration), a monitoring offset (a symbol offset or a monitoring symbol offset) in a symbol unit (symbol level) is introduced in a slot to which PDCCH monitoring (e.g., slot offset) has been configured. A UE can determine a start symbol of monitoring based on the symbol offset. When 1 slot is 14 OFDM symbols, a range of a value of the symbol offset (start symbol) may be from a 0 symbol to 13 symbols.

A parameter for determining the symbol offset may be notified to the UE. A parameter (e.g., a symbol offset or a candidate index) indicating one of a plurality of candidates of the symbol offset may be notified by a higher layer signaling, or a parameter associated with the symbol offset may be notified. The UE determines the symbol offset based on a parameter for determining the symbol offset.

In addition to aspect 1-1, aspect 1-2 may be applied.

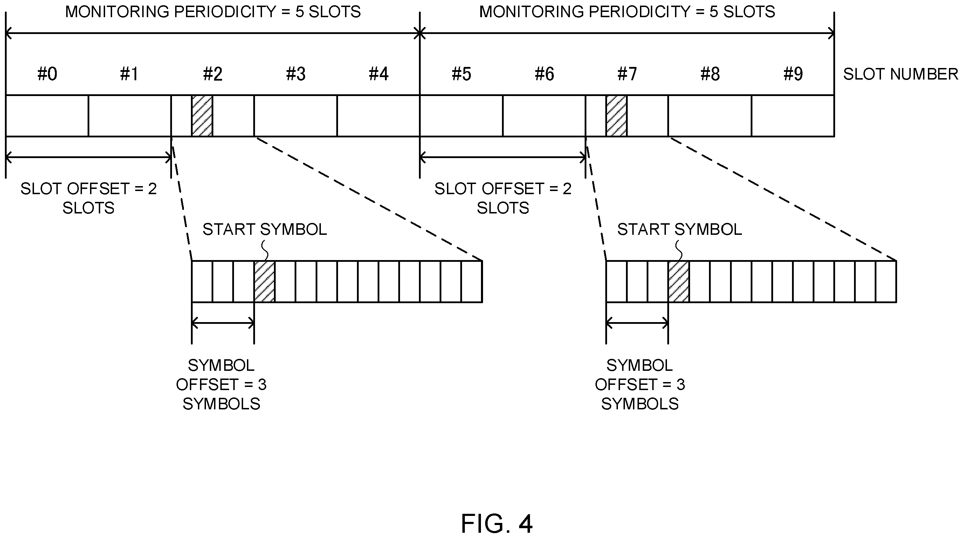

When a monitoring periodicity is configured to 5 slots, the slot offset is configured to 2 slots and the symbol offset is configured to 3 symbols as illustrated in Fig. 4, the UE recognizes that a start timing of the monitoring occasions is a symbol #3 in each of slots #2 and #7.

According to this aspect 1-2, the UE can specify a start symbol of monitoring in the monitoring periodicity.

### <Aspect 1-3>

To determine a monitoring occasion (monitoring configuration), a monitoring duration is introduced. A range of a value of the monitoring duration may be from 1 symbol to 3 symbols.

A UE may determine a CORESET duration based on the monitoring duration. The CORESET duration may be equal to the monitoring duration, or may be different from the monitoring duration.

In addition, the CORESET duration may be configured to the UE. CORESET configuration information including the CORESET duration may be configured to the UE. The UE may determine the monitoring duration based on the CORESET duration.

In addition to aspect 1-1, aspect 1-3 may be applied. In addition to aspects 1-1 and 1-2, aspect 1-3 may be applied.

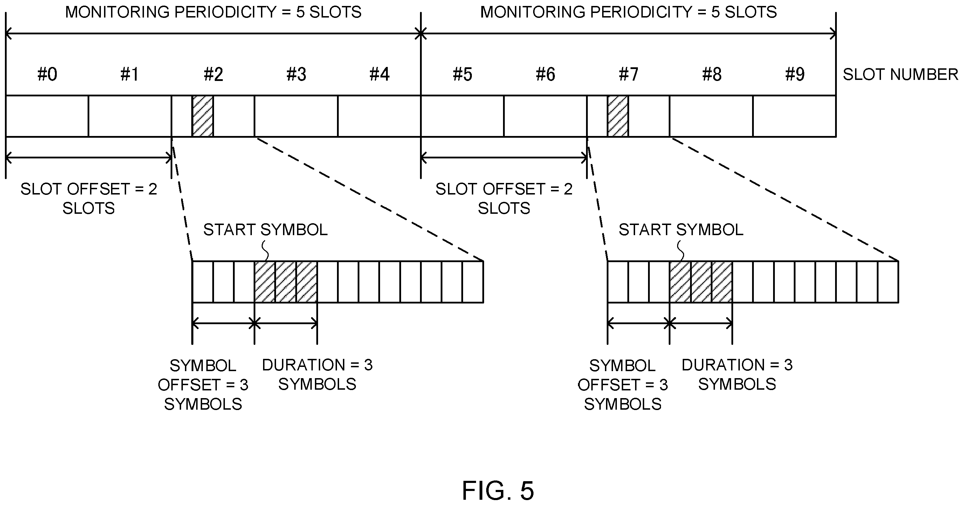

When a monitoring periodicity is configured to 5 slots, a slot offset is configured to 2 slots, a symbol offset is configured to 3 symbols and the monitoring duration is configured to 3 symbols as illustrated in Fig. 5, the UE recognizes that the monitoring occasion is symbols #3 to #5 in each of slots #2 and #7.

According to this aspect 1-3, the UE can specify the monitoring occasion or the CORESET duration.

Above aspects 1-1, 1-2 and 1-3 may be applied to a monitoring occasion of a regular PDCCH and/or a monitoring occasion of a GC-PDCCH.

At least one of the slot offset, the symbol offset and the monitoring duration may depend on an SCS in at least one of the regular PDCCH and the GC-PDCCH.

A necessary parameter differs according to which one of cases 1-1, 1-2, 2-1 and 2-2 is used.

By using, for example, aspect 1-1, it is possible to realize the case 1-1.

By using, for example, aspects 1-1 and 1-3, it is possible to realize the case 1-2.

By using, for example, aspects 1-1 and 1-2, it is possible to realize the case 2-1.

By using, for example, aspects 1-1, 1-2 and 1-3, it is possible to realize the case 2-2.

The slot offset and/or the symbol offset may be referred to as a monitoring offset.

### (Aspect 2)

Premises 1 and 2 on a relationship between an SCS and a monitoring occasion (monitoring configuration) of a PDCCH are supposed.

Premise 1: To determine monitoring occasions in a slot for a regular PDCCH and a GC-PDCCH, the monitoring periodicity and a monitoring offset that depend on the SCS are configured.

Premise 2: The monitoring periodicity and the monitoring offset do not depend on the SCS in a case of the regular PDCCH, and the monitoring periodicity and the monitoring offset depend on the SCS in a case of the GC-PDCCH.

How to configure the monitoring periodicities and the monitoring offsets to the regular PDCCH and the GC-PDCCH in each of the premises 1 and 2 matters.

One of following options 1 and 2 may be applied.

### <Option 1>

A monitoring parameter of the regular PDCCH and a monitoring parameter of the GC-PDCCH may be independently configured. More specifically, one of following options 1-1 and 1-2 may be applied.

### «Option 1-1»

The monitoring parameter of the regular PDCCH and the monitoring parameter of the GC-PDCCH may be configured to the UE by a higher layer signaling.

The regular PDCCH monitoring periodicity in a slot unit may be notified to the UE by a higher layer parameter (e.g., Monitoring-periodicity-PDCCH-slot).

The regular PDCCH monitoring offset in the slot unit may be notified to the UE by a higher layer parameter (e.g., Monitoring-offset-PDCCH-slot).

The GC-PDCCH monitoring periodicity in the slot unit may be notified to the UE by a higher layer parameter (e.g., SFI-monitoring-periodicity).

The GC-PDCCH monitoring offset in the slot unit may be notified to the UE by a higher layer parameter (e.g., SFI-monitoring-offset).

A symbol offset for the regular PDCCH may be notified to the UE by a higher layer parameter, or a symbol offset for the GC-PDCCH may be notified to the UE by a higher layer parameter. A monitoring duration for the regular PDCCH may be notified to the UE by a higher layer parameter. A monitoring duration for the GC-PDCCH may be notified to the UE by a higher layer parameter.

### <<Option 1-2>>

A parameter set (parameter configuration) for monitoring may be configured (or specified) in advance for the regular PDCCH and/or the GC-PDCCH. The parameter set may be configured by a higher layer signaling, or may be specified in a specification.

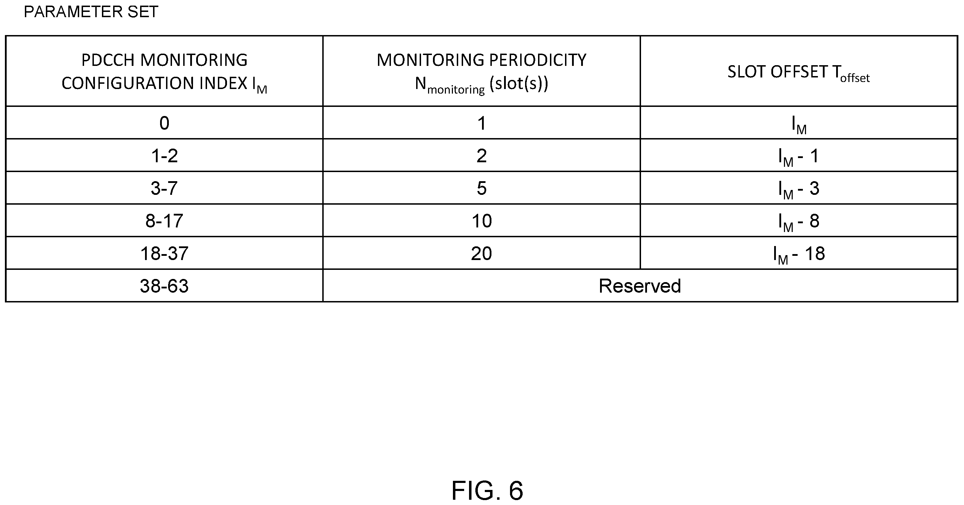

As illustrated in Fig. 6, a table including a plurality of parameter sets (entries) may be used. Each parameter set includes a PDCCH monitoring configuration index I_{M} (or a range thereof), a monitoring periodicity N_{monitoring} [slot] and a slot offset T_{offset} [slot]. Part of parameter sets may be reserved. The slot offset may be expressed by an equation that uses I_{M}.

Each entry may include the symbol offset and/or the monitoring duration.

A common table may be used for the regular PDCCH and the GC-PDCCH, or a table for the regular PDCCH and a table for the GC-PDCCH may be used.

A PDCCH monitoring configuration index (regular PDCCH monitoring configuration index) for the regular PDCCH may be configured to the UE. The regular PDCCH monitoring configuration index may be configured by a higher layer signaling. The UE determines a parameter set associated with the regular PDCCH monitoring configuration index from the table.

A PDCCH monitoring configuration index (GC-PDCCH monitoring configuration index) for the GC-PDCCH may be configured to the UE. The GC-PDCCH monitoring configuration index may be configured by a higher layer signaling. The UE determines a parameter set associated with the GC-PDCCH monitoring configuration index from the table.

One of following options 1-2-1 and 1-2-2 may be applied to the GC-PDCCH.

### <<Option 1-2-1>>

The GC-PDCCH monitoring configuration index may be independently given to a parameter set of each SCS.

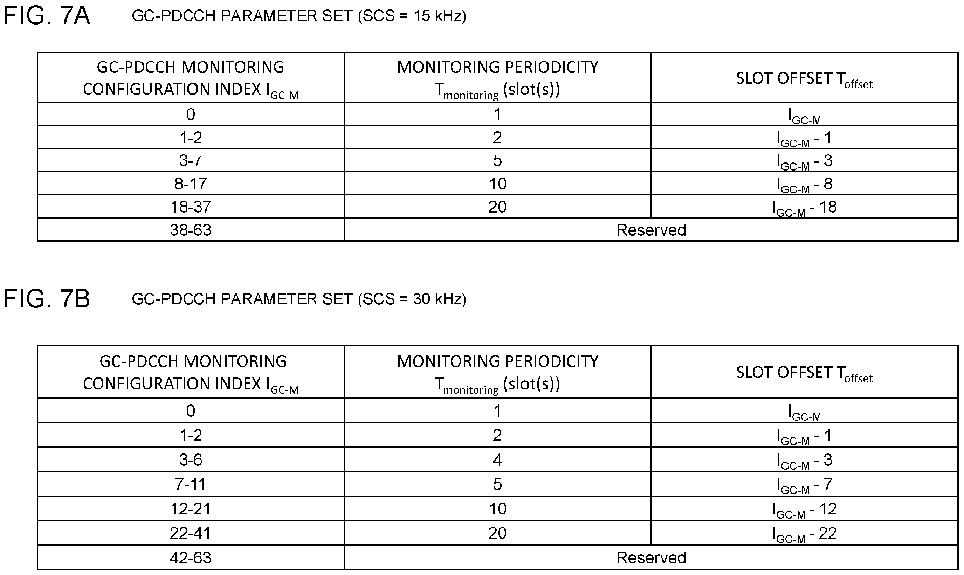

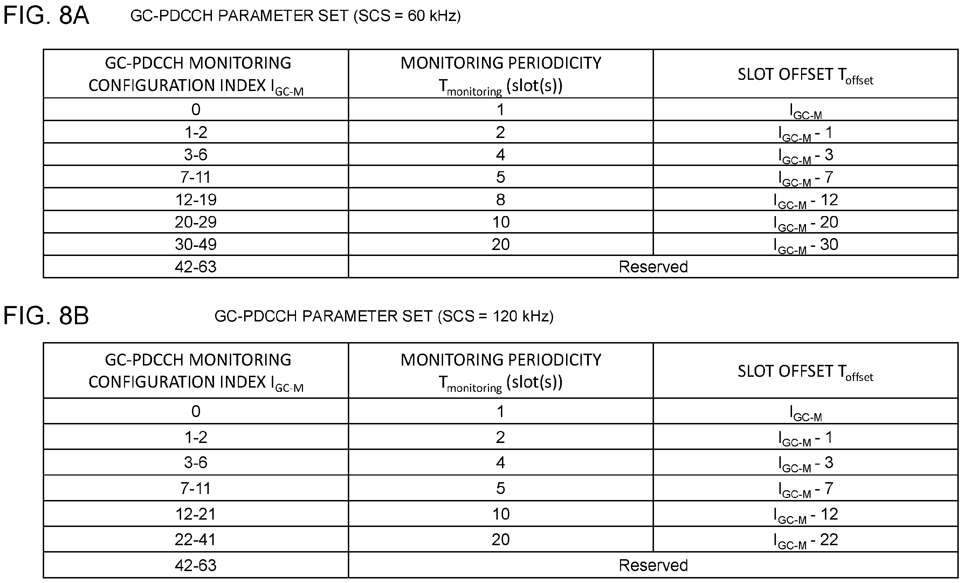

Fig. 7A illustrates a table of a GC-PDCCH parameter set for an SCS = 15 kHz. Fig. 7B illustrates a table of a GC-PDCCH parameter set for an SCS = 30 kHz. Fig. 8A illustrates a table of a GC-PDCCH parameter set for an SCS = 60 kHz. Fig. 8B illustrates a table of a GC-PDCCH parameter set for an SCS = 120 kHz.

Each table includes a plurality of parameter sets (entries). Each parameter set includes a GC-PDCCH monitoring configuration index I_{GC-M} (or a range thereof), the monitoring periodicity N_{monitoring} [slot] and the slot offset T_{offset} [slot]. Part of parameter sets may be reserved. The slot offset may be expressed by an equation that uses I_{GC-M}. I_{GC-M} may be expressed as I_{SFI-M}.

The UE determines a table that is referred to based on an SCS configured to a CORESET that is referred to when the GC-PDCCH is monitored, or an SCS configured to a partial bandwidth (BWP: Bandwidth Part) to which the CORESET that is referred to when the GC-PDCCH is monitored has been configured, and determines the parameter set based on the GC-PDCCH monitoring configuration index. In other words, the UE reads a different table based on the SCS configured to the CORESET that is referred to when the GC-PDCCH is monitored, or the SCS configured to the partial bandwidth (BWP: Bandwidth Part) to which the CORESET that is referred to when the GC-PDCCH is monitored has been configured.

### <<Option 1-2-2>>

The GC-PDCCH monitoring configuration index may be given to a parameter set obtained by coupling parameter sets of all SCSs.

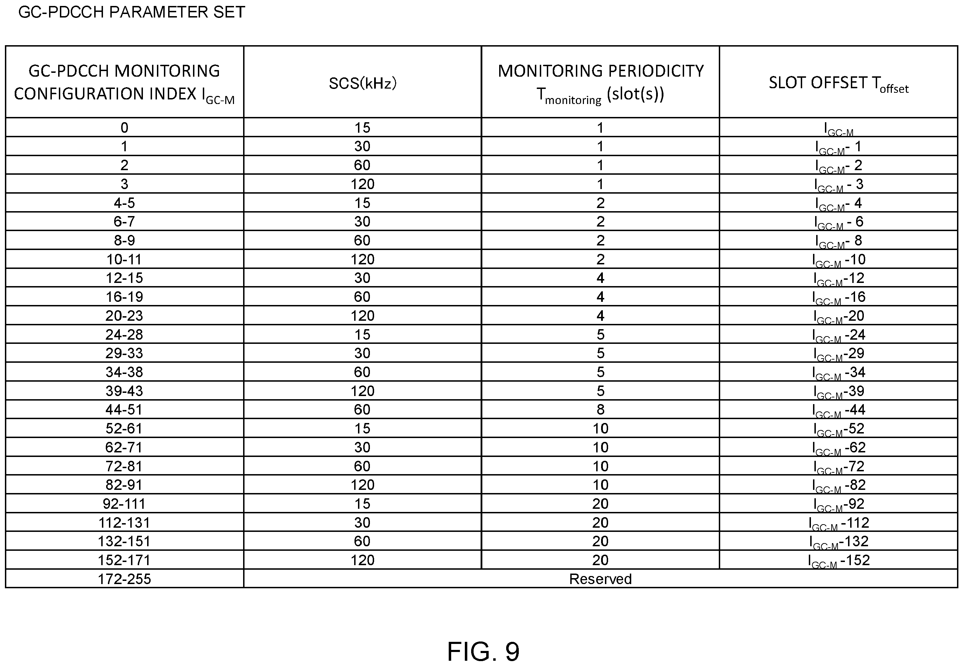

As illustrated in Fig. 9, a table including a plurality of parameter sets (entries) may be used. Each parameter set includes a GC-PDCCH monitoring configuration index I_{GC-M} (or a range thereof), an SCS [kHz], the monitoring periodicity N_{monitoring} [slot] and the slot offset T_{offset} [slot]. Part of parameter sets may be reserved. The slot offset may be expressed by an equation that uses I_{GC-M}.

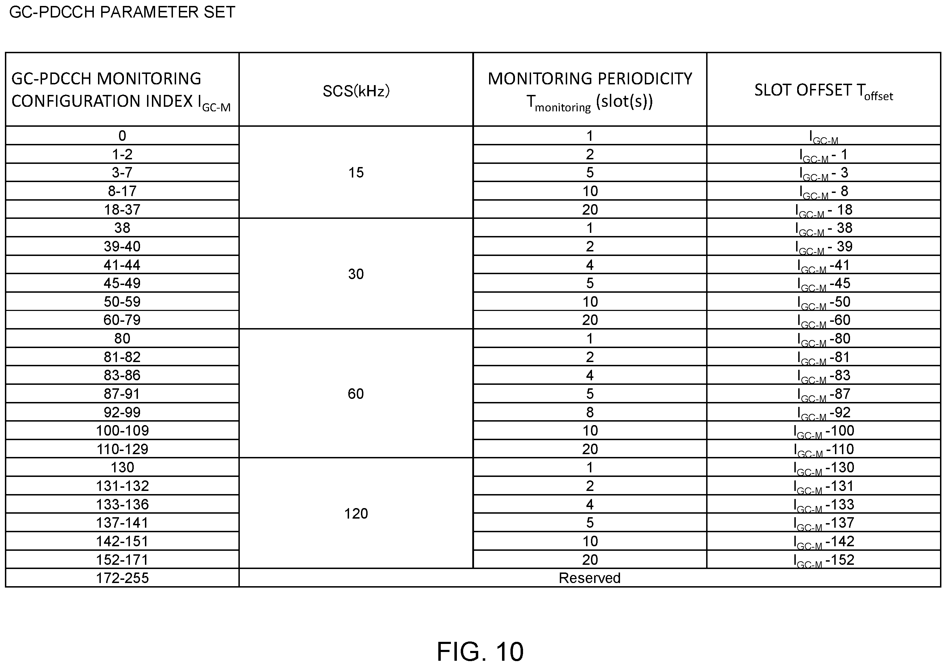

In Fig. 9, GC-PDCCH monitoring configuration indices are given to parameter sets sorted in an ascending order of monitoring periodicities. A table as illustrated in Fig. 10 may be used instead of that in Fig. 9. Although information included in Fig. 10 is similar to that in Fig. 9, the GC-PDCCH monitoring configuration indices are given to the parameter sets sorted in the ascending order of SCSs.

According to the above option 1-2, the UE can determine a monitoring periodicity and a slot offset based on a notification of one parameter and, consequently, suppress a notification overhead compared to the option 1-1.

### <Option 2>

The monitoring parameter of the regular PDCCH and the monitoring parameter of the GC-PDCCH may be common. More specifically, one of following options 2-1 and 2-2 may be applied.

### <<Option 2-1>>

Each of a plurality of parameters for monitoring of a PDCCH may be independently configured to the UE by a higher layer signaling.

The PDCCH monitoring periodicity in the slot unit may be notified to the UE by a higher layer parameter (e.g., Monitoring-periodicity-PDCCH-slot). This PDCCH monitoring periodicity may be applied to both of the regular PDCCH and the GC-PDCCH.

The PDCCH monitoring offset in the slot unit may be notified to the UE by a higher layer parameter (e.g., Monitoring-offset-PDCCH-slot). This PDCCH monitoring offset may be applied to both of the regular PDCCH and the GC-PDCCH.

According to the above option 1-2, the UE can determine parameters for both of the regular PDCCH and the GC-PDCCH based on a notification of one parameter, and consequently suppress a notification overhead compared to the option 1-1.

### <<Option 2-2>>

To monitor the regular PDCCH and the GC-PDCCH, a common parameter set (parameter configuration) may be configured (or specified) in advance. The parameter set may be configured by a higher layer signaling, or may be specified in the specification. A parameter set that is common between the regular PDCCH and the GC-PDCCH may be referred to as a common parameter set.

PDCCH monitoring configuration indices for the regular PDCCH and/or the GC-PDCCH may be configured to the UE. The PDCCH monitoring configuration indices may be notified by a higher layer signaling. The UE determines parameter sets associated with the configured PDCCH monitoring configuration indices.

One of following options 2-2-1 and 2-2-2 may be applied to the GC-PDCCH.

### <<Option 2-2-1>>

The PDCCH monitoring configuration index may be independently given to a parameter set of each SCS.

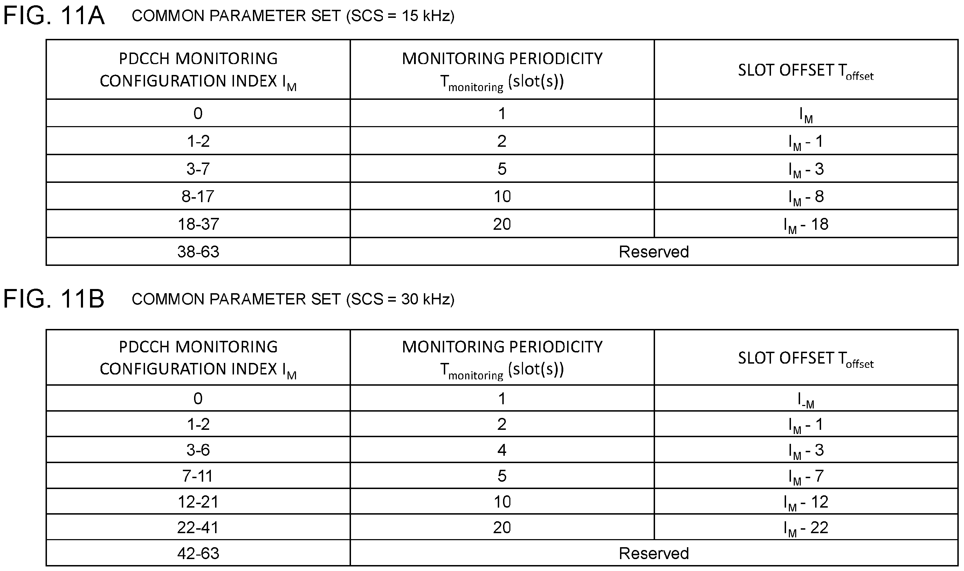

Fig. 11A illustrates a table of a common parameter set for an SCS = 15 kHz.

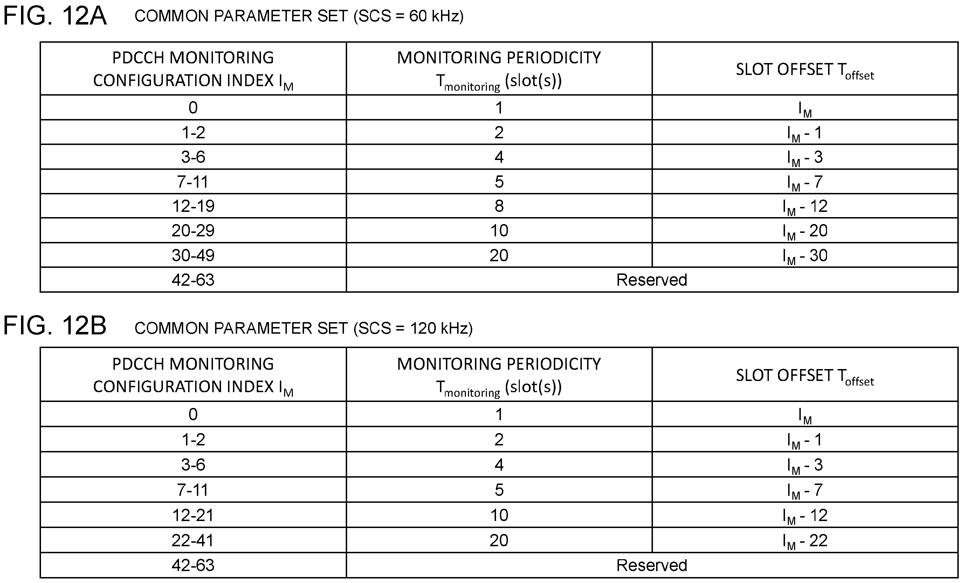

Fig. 11B illustrates a table of a common parameter set for an SCS = 30 kHz. Fig. 12A illustrates a table of a common parameter set for an SCS = 60 kHz. Fig. 12B illustrates a table of a common parameter set for an SCS = 120 kHz.

Each table includes a plurality of parameter sets (entries). Each parameter set includes a PDCCH monitoring configuration index I_{M} (or a range thereof), the monitoring periodicity N_{monitoring} [slot] and the slot offset T_{offset} [slot]. Part of parameter sets may be reserved. The slot offset may be expressed by an equation that uses I_{M}.

The UE determines a table based on an SCS configured to a CORESET, and determines a parameter set based on the GC-PDCCH monitoring configuration index. In other words, the UE reads a table that differs according to an SCS configured to the CORESET.

### <<Option 2-2-2>>

The GC-PDCCH monitoring configuration index may be given to a parameter set obtained by coupling parameter sets of all SCSs.

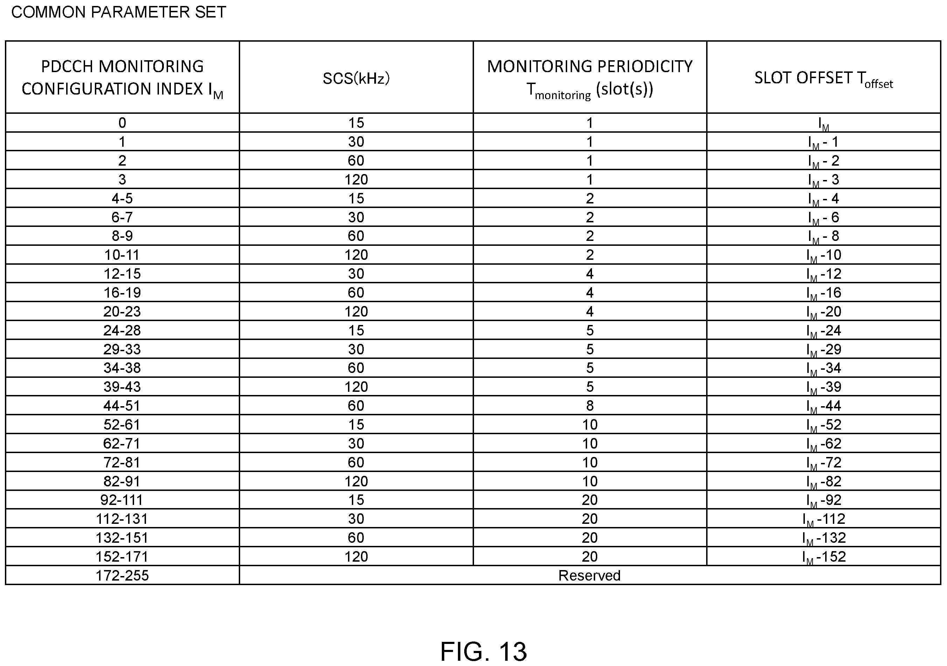

As illustrated in Fig. 13, a table includes a plurality of parameter sets (entries). Each parameter set includes a PDCCH monitoring configuration index I_{M} (or a range thereof), the SCS [kHz], the monitoring periodicity N_{monitoring} [slot] and the slot offset T_{offset} [slot]. Part of parameter sets may be reserved.

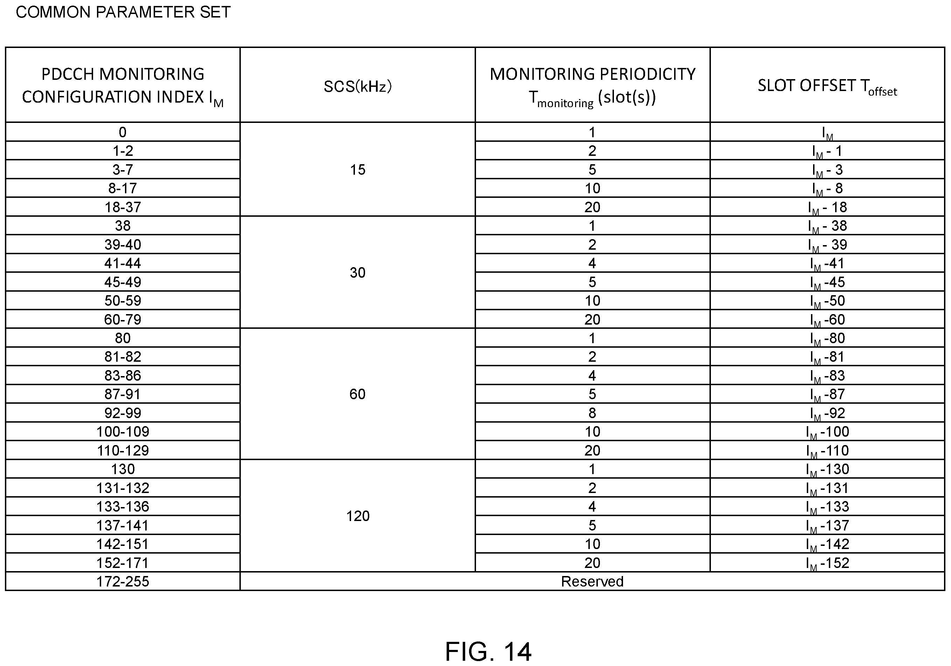

In Fig. 13, PDCCH monitoring configuration indices are given to parameter sets sorted in an ascending order of monitoring periodicities. A table as illustrated in Fig. 14 may be used instead of that in Fig. 13. Although information included in Fig. 14 is similar to that in Fig. 13, the PDCCH monitoring configuration indices are given to the parameter sets sorted in the ascending order of SCSs.

According to the above option 2-2, the UE can determine monitoring periodicities and slot offsets for both of the regular PDCCH and the GC-PDCCH based on a notification of one parameter and, consequently, suppress a notification overhead compared to the option 1-2.

### (Radio Communication System)

The configuration of the radio communication system according to one embodiment of the present disclosure will be described below. This radio communication system uses one or a combination of the radio communication method according to each of the above embodiment of the present disclosure to perform communication.

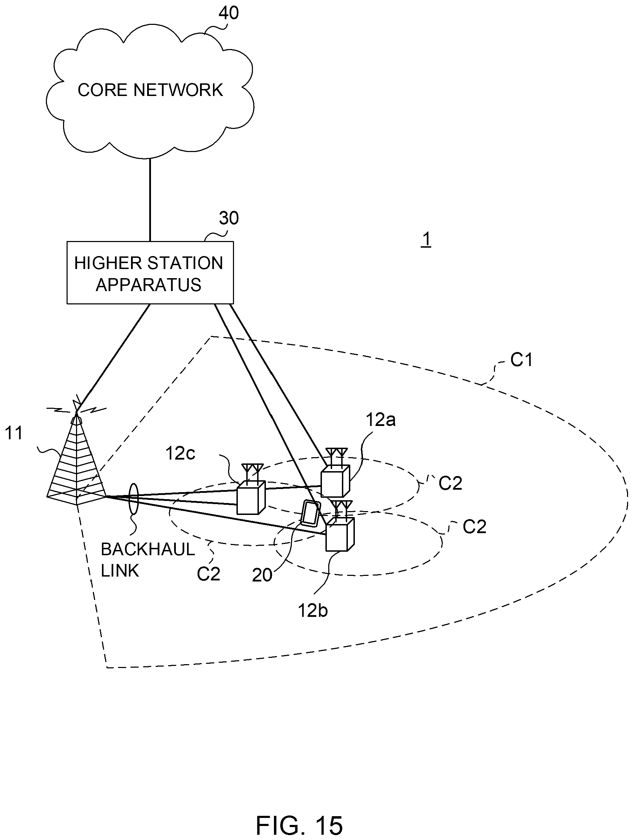

Fig. 15 is a diagram illustrating one example of a schematic configuration of the radio communication system according to the one embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to the aspect illustrated in Fig. 15.

The user terminal 20 can connect with both of the radio base station 11 and the radio base stations 12. The user terminal 20 is assumed to concurrently use the macro cell C1 and the small cells C2 by using CA or DC. Furthermore, the user terminal 20 can apply CA or DC by using a plurality of cells (CCs) (e.g., five CCs or less or six CCs or more).

The user terminal 20 and the radio base station 11 can communicate by using a carrier (also referred to as a legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz or 5 GHz) or may use the same carrier as that used between the user terminal 20 and the radio base station 11. In this regard, a configuration of the frequency band used by each radio base station is not limited to this.

Furthermore, the user terminal 20 can perform communication by using Time Division Duplex (TDD) and/or Frequency Division Duplex (FDD) in each cell. Furthermore, each cell (carrier) may be applied a single numerology or may be applied a plurality of different numerologies.

The numerology may be a communication parameter to be applied to transmission and/or reception of a certain signal and/or channel, and may indicate at least one of, for example, a subcarrier spacing, a bandwidth, a symbol length, a cyclic prefix length, a subframe length, a TTI length, the number of symbols per TTI, a radio frame configuration, specific filtering processing performed by a transceiver in a frequency domain, and specific windowing processing performed by the transceiver in a time domain. For example, a case where subcarrier spacings of constituent OFDM symbols are different and/or a case where the numbers of OFDM symbols are different on a certain physical channel may be read as that numerologies are different.

The radio base station 11 and each radio base station 12 (or the two radio base stations 12) may be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and applies Single Carrier-Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and a System Information Block (SIB) are conveyed on the PDSCH. Furthermore, a Master Information Block (MIB) is conveyed on the PBCH.

The downlink L1/L2 control channel includes a Physical Downlink Control Channel (PDCCH), an Enhanced Physical Downlink Control Channel (EPDCCH), a Physical Control Format Indicator Channel (PCFICH), and a Physical Hybrid-ARQ Indicator Channel (PHICH). Downlink Control Information (DCI) including scheduling information of the PDSCH and/or the PUSCH is conveyed on the PDCCH.

In addition, the scheduling information may be notified by the DCI. For example, DCI for scheduling DL data reception may be referred to as a DL assignment, and DCI for scheduling UL data transmission may be referred to as a UL grant.

The number of OFDM symbols used for the PDCCH is conveyed on the PCFICH. Transmission acknowledgement information (also referred to as, for example, retransmission control information, HARQ-ACK or ACK/NACK) of a Hybrid Automatic Repeat reQuest (HARQ) for the PUSCH is conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific reference signal). Furthermore, a reference signal to be conveyed is not limited to these.

### (Radio Base Station)

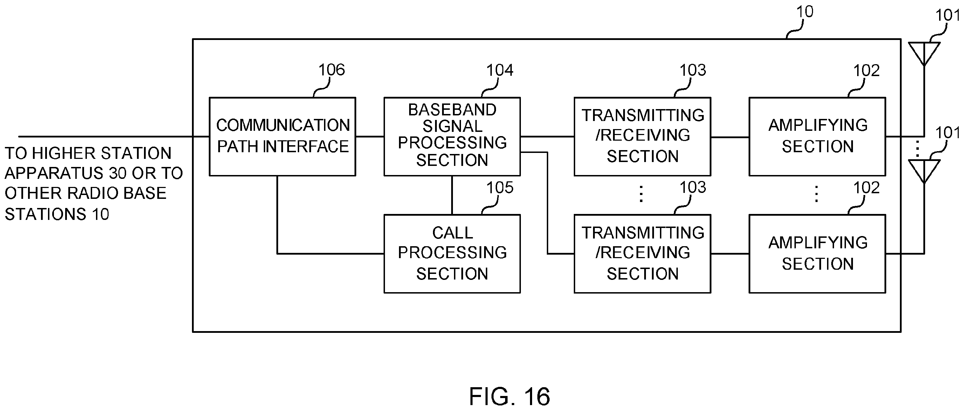

Fig. 16 is a diagram illustrating one example of an overall configuration of the radio base station according to the one embodiment. The radio base station 10 includes pluralities of transmission/reception antennas 101, amplifying sections 102 and transmission/reception sections 103, a baseband signal processing section 104, a call processing section 105 and a channel interface 106. In this regard, the radio base station 10 only needs to be configured to include one or more of each of the transmission/reception antennas 101, the amplifying sections 102 and the transmission/reception sections 103.

User data transmitted from the radio base station 10 to the user terminal 20 on downlink is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmission/reception section 103. Furthermore, the baseband signal processing section 104 performs transmission processing such as channel coding and inverse fast Fourier transform on a downlink control signal, too, and transfers the downlink control signal to each transmission/reception section 103.

Each transmission/reception section 103 converts a baseband signal precoded and output per antenna from the baseband signal processing section 104 into a radio frequency range, and transmits a radio frequency signal. The radio frequency signal subjected to frequency conversion by each transmission/reception section 103 is amplified by each amplifying section 102, and is transmitted from each transmission/reception antenna 101. The transmission/reception sections 103 can be composed of transmitters/receivers, transmission/reception circuits or transmission/reception apparatuses described based on a common knowledge in a technical field according to the present disclosure. In this regard, the transmission/reception sections 103 may be composed as an integrated transmission/reception section or may be composed of transmission sections and reception sections.

Meanwhile, each amplifying section 102 amplifies a radio frequency signal received by each transmission/reception antenna 101 as an uplink signal. Each transmission/reception section 103 receives the uplink signal amplified by each amplifying section 102. Each transmission/reception section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the channel interface 106. The call processing section 105 performs call processing (such as a configuration and release) of a communication channel, state management of the radio base station 10 and radio resource management.

The channel interface 106 transmits and receives signals to and from the higher station apparatus 30 via a given interface. Furthermore, the channel interface 106 may transmit and receive (backhaul signaling) signals to and from the another radio base station 10 via an inter-base station interface (e.g., optical fibers compliant with the Common Public Radio Interface (CPRI) or the X2 interface).

Furthermore, each transmission/reception section 103 transmits Downlink Control Information (DCI) via a regular PDCCH or a GC-PDCCH to the user terminal 20.

Each transmission/reception section 103 may transmit information related to PDCCH monitoring periodicities for a monitoring BWP/CC, information related to an association between numerologies and the monitoring periodicities, information related to a cell-specific monitoring periodicity, information related to a BWP-specific monitoring periodicity, and information related to a CC-specific monitoring periodicity.

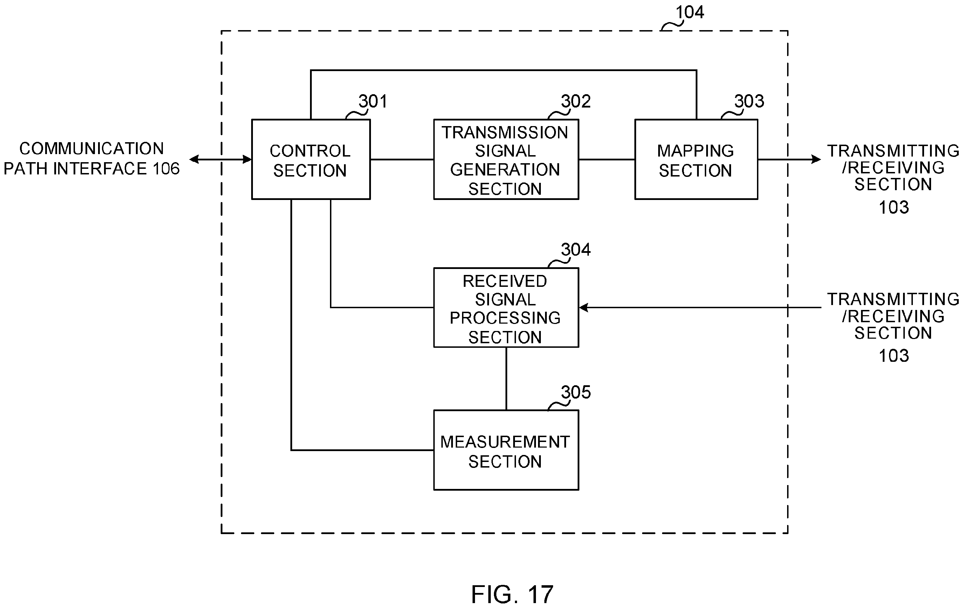

Fig. 17 is a diagram illustrating one example of a function configuration of the radio base station according to the one embodiment of the present disclosure. In addition, this example mainly illustrates function blocks of characteristic portions according to the present embodiment, and assumes that the radio base station 10 includes other function blocks, too, that are necessary for radio communication.

The baseband signal processing section 104 includes at least a control section (scheduler) 301, a transmission signal generating section 302, a mapping section 303, a received signal processing section 304 and a measurement section 305. In addition, these components only need to be included in the radio base station 10, and part or all of the components may not be included in the baseband signal processing section 104.

The control section (scheduler) 301 controls the entire radio base station 10. The control section 301 can be composed of a controller, a control circuit or a control apparatus described based on the common knowledge in the technical field according to the present disclosure.

The control section 301 controls, for example, signal generation of the transmission signal generating section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal that is transmitted on the PDSCH), and a downlink control signal (e.g., a signal that is transmitted on the PDCCH and/or the EPDCCH and is, for example, transmission acknowledgement information). Furthermore, the control section 301 controls generation of a downlink control signal and a downlink data signal based on a result obtained by deciding whether or not it is necessary to perform retransmission control on an uplink data signal.

The control section 301 controls scheduling of synchronization signals (e.g., a Primary Synchronization Signal (PSS)/a Secondary Synchronization Signal (SSS)) and downlink reference signals (e.g., a CRS, a CSI-RS and a DMRS).

The control section 301 controls scheduling of an uplink data signal (e.g., a signal that is transmitted on the PUSCH), an uplink control signal (e.g., a signal that is transmitted on the PUCCH and/or the PUSCH and is, for example, transmission acknowledgement information), a random access preamble (e.g., a signal that is transmitted on the PRACH) and an uplink reference signal.

Furthermore, the control section 301 may determine a monitoring configuration of a downlink control channel, and notify the user terminal 20 of information related to the monitoring configuration (e.g., a monitoring periodicity, a slot offset, a symbol offset and a monitoring duration).

The downlink control channel described herein may be, for example, a regular PDCCH or a GC-PDCCH. Furthermore, control for a frequency resource may be transmission/reception processing of the frequency resource based on SFI, or transmission/reception processing of the frequency resource based on scheduling (a DL assignment or a UL grant).

The transmission signal generating section 302 generates a downlink signal (such as a downlink control signal, a downlink data signal or a downlink reference signal) based on an instruction from the control section 301, and outputs the downlink signal to the mapping section 303. The transmission signal generating section 302 can be composed of a signal generator, a signal generating circuit or a signal generating apparatus described based on the common knowledge in the technical field according to the present disclosure.

The transmission signal generating section 302 generates, for example, a DL assignment for notifying downlink data allocation information, and/or a UL grant for notifying uplink data allocation information based on the instruction from the control section 301. The DL assignment and the UL grant are both DCI, and conform to a DCI format. Furthermore, the transmission signal generating section 302 performs encoding processing and modulation processing on a downlink data signal according to a code rate and a modulation scheme determined based on Channel State Information (CSI) from each user terminal 20.

The mapping section 303 maps the downlink signal generated by the transmission signal generating section 302, on given radio resources based on the instruction from the control section 301, and outputs the downlink signal to each transmission/reception section 103. The mapping section 303 can be composed of a mapper, a mapping circuit or a mapping apparatus described based on the common knowledge in the technical field according to the present disclosure.

The received signal processing section 304 performs reception processing (e.g., demapping, demodulation and decoding) on a received signal input from each transmission/reception section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present disclosure.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present disclosure.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 305 may output a measurement result to the control section 301.

### (User Terminal)

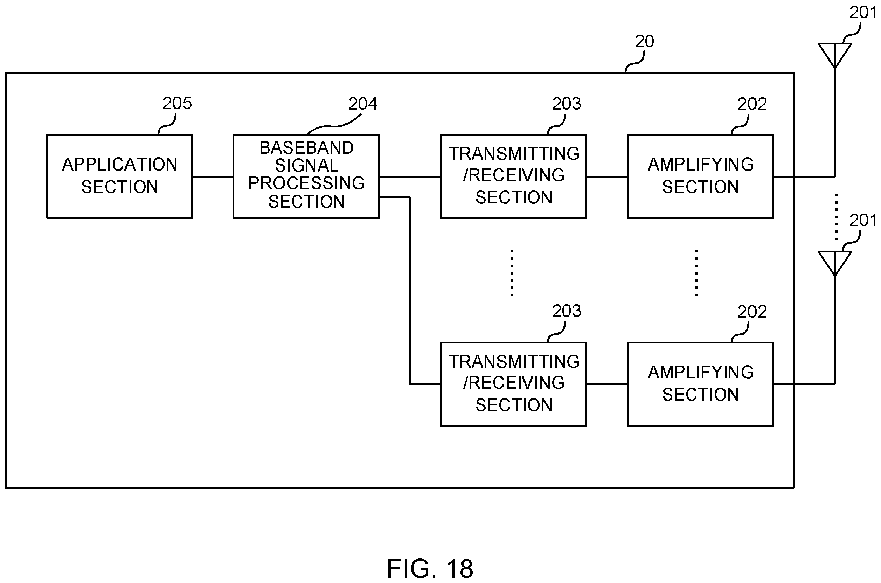

Fig. 18 is a diagram illustrating one example of an overall configuration of the user terminal according to the one embodiment. The user terminal 20 includes pluralities of transmission/reception antennas 201, amplifying sections 202 and transmission/reception sections 203, a baseband signal processing section 204 and an application section 205. In this regard, the user terminal 20 only needs to be configured to include one or more of each of the transmission/reception antennas 201, the amplifying sections 202 and the transmission/reception sections 203.

Each amplifying section 202 amplifies a radio frequency signal received at each transmission/reception antenna 201. Each transmission/reception section 203 receives a downlink signal amplified by each amplifying section 202. Each transmission/reception section 203 performs frequency conversion on the received signal into a baseband signal, and outputs the baseband signal to the baseband signal processing section 204. The transmission/reception sections 203 can be composed of transmitters/receivers, transmission/reception circuits or transmission/reception apparatuses described based on the common knowledge in the technical field according to the present disclosure. In this regard, the transmission/reception sections 203 may be composed as an integrated transmission/reception section or may be composed of transmission sections and reception sections.

The baseband signal processing section 204 performs FFT processing, error correcting decoding and retransmission control reception processing on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs retransmission control transmission processing (e.g., HARQ transmission processing), channel coding, precoding, Discrete Fourier Transform (DFT) processing and IFFT processing on the uplink user data, and transfers the uplink user data to each transmission/reception section 203.

Each transmission/reception section 203 converts the baseband signal output from the baseband signal processing section 204 into a radio frequency range, and transmits a radio frequency signal. The radio frequency signal subjected to the frequency conversion by each transmission/reception section 203 is amplified by each amplifying section 202, and is transmitted from each transmission/reception antenna 201.

Furthermore, each transmission/reception section 203 may receive the downlink control channel (e.g., the regular PDCCH and/or the GC-PDCCH).

Furthermore, each transmission/reception section 203 may receive the Downlink Control Information (DCI) via the regular PDCCH or the GC-PDCCH. For example, the DCI may include SFI.

Each transmission/reception section 203 may receive information related to a PDCCH monitoring configuration (e.g., the monitoring periodicity, the slot offset, the symbol offset and the monitoring duration), information related to an association between numerologies (e.g., SCS) and the monitoring configuration), information related to a CORESET configuration, and information related to an SCS from the radio base station.

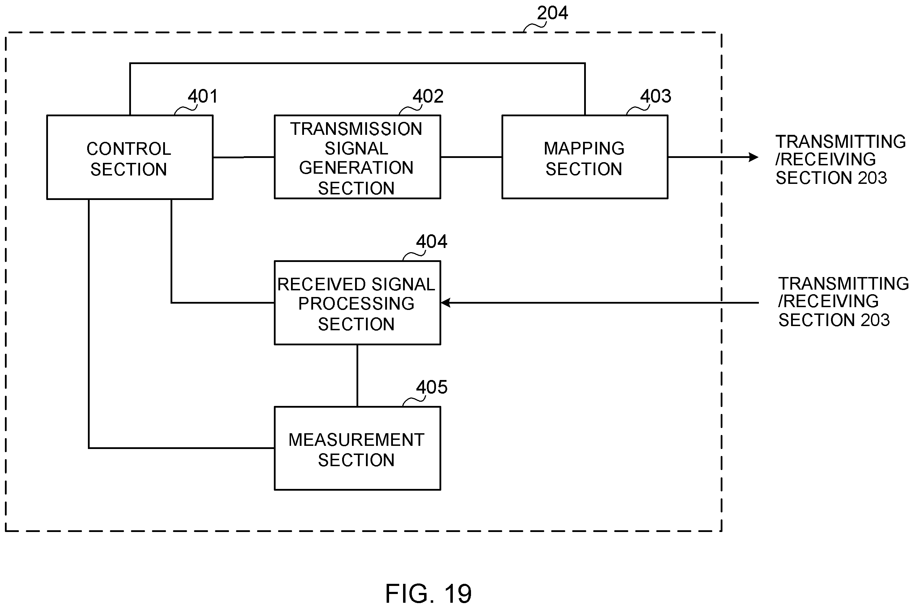

Fig. 19 is a diagram illustrating one example of a function configuration of the user terminal according to the one embodiment. In addition, this example mainly illustrates function blocks of characteristic portions according to the present embodiment, and assumes that the user terminal 20 includes other function blocks, too, that are necessary for radio communication.

The baseband signal processing section 204 of the user terminal 20 includes at least a control section 401, a transmission signal generating section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present disclosure.

The control section 401 controls, for example, signal generation of the transmission signal generating section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the radio base station 10. The control section 401 controls generation of an uplink control signal and/or an uplink data signal based on a result obtained by deciding whether or not it is necessary to perform retransmission control on the downlink control signal and/or the downlink data signal.

Furthermore, the subcarrier spacing may be configured to the control section 401. Furthermore, the control section 401 may control monitoring of the downlink control channel (e.g., the regular PDCCH and/or the GC-PDCCH) by using a periodicity and an offset of a start timing associated with the subcarrier spacing.

Furthermore, the control section 401 may control the monitoring by using at least one of an offset in a slot unit (a slot offset or a monitoring offset), an offset in a symbol unit (symbol offset) and a monitoring duration associated with the subcarrier spacing (aspect 1).

Furthermore, the control section 401 may determine a periodicity and an offset of monitoring of a first downlink control channel (regular PDCCH) that is specific to the user terminal 20, and determine a periodicity and an offset of monitoring of a second downlink control channel (e.g., GC-PDCCH) that is common to a user terminal group (aspect 2/option 1).

Furthermore, the control section 401 may determine a periodicity and an offset used for both of the monitoring of the first downlink control channel that is specific to the user terminal, and the monitoring of the second downlink control channel that is common to the user terminal group.

Furthermore, a plurality of parameters each including a periodicity and an offset may be configured in advance to the control section 401, and the control section 401 may control monitoring of at least one of the first downlink control channel and the second downlink control channel by using one of a plurality of parameter sets (aspect 2/options 1-2 and 2-2).

Furthermore, when obtaining from the received signal processing section 404 various pieces of information notified from the radio base station 10, the control section 401 may update parameters used for control based on the various pieces of information.

The transmission signal generating section 402 generates an uplink signal (such as an uplink control signal, an uplink data signal or an uplink reference signal) based on an instruction from the control section 401, and outputs the uplink signal to the mapping section 403. The transmission signal generating section 402 can be composed of a signal generator, a signal generating circuit or a signal generating apparatus described based on the common knowledge in the technical field according to the present disclosure.

The transmission signal generating section 402 generates, for example, an uplink control signal related to transmission acknowledgement information and Channel State Information (CSI) based on the instruction from the control section 401. Furthermore, the transmission signal generating section 402 generates an uplink data signal based on the instruction from the control section 401. When, for example, the downlink control signal notified from the radio base station 10 includes a UL grant, the transmission signal generating section 402 is instructed by the control section 401 to generate an uplink data signal.

The mapping section 403 maps the uplink signal generated by the transmission signal generating section 402, on radio resources based on the instruction from the control section 401, and outputs the uplink signal to each transmission/reception section 203. The mapping section 403 can be composed of a mapper, a mapping circuit or a mapping apparatus described based on the common knowledge in the technical field according to the present disclosure.

The received signal processing section 404 performs reception processing (e.g., demapping, demodulation and decoding) on the received signal input from each transmission/reception section 203. In this regard, the received signal is, for example, a downlink signal (such as a downlink control signal, a downlink data signal or a downlink reference signal) transmitted from the radio base station 10. The received signal processing section 404 can be composed of a signal processor, a signal processing circuit or a signal processing apparatus described based on the common knowledge in the technical field according to the present disclosure. Furthermore, the received signal processing section 404 can compose the reception section according to the present disclosure.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present disclosure.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

### (Hardware Configuration)

In addition, the block diagrams used to describe the above embodiment illustrate blocks in function units. These function blocks (components) are realized by an optional combination of hardware and/or software. Furthermore, a method for realizing each function block is not limited in particular. That is, each function block may be realized by using one physically and/or logically coupled apparatus or may be realized by using a plurality of these apparatuses formed by connecting two or more physically and/or logically separate apparatuses directly and/or indirectly (by using, for example, wired connection and/or radio connection).

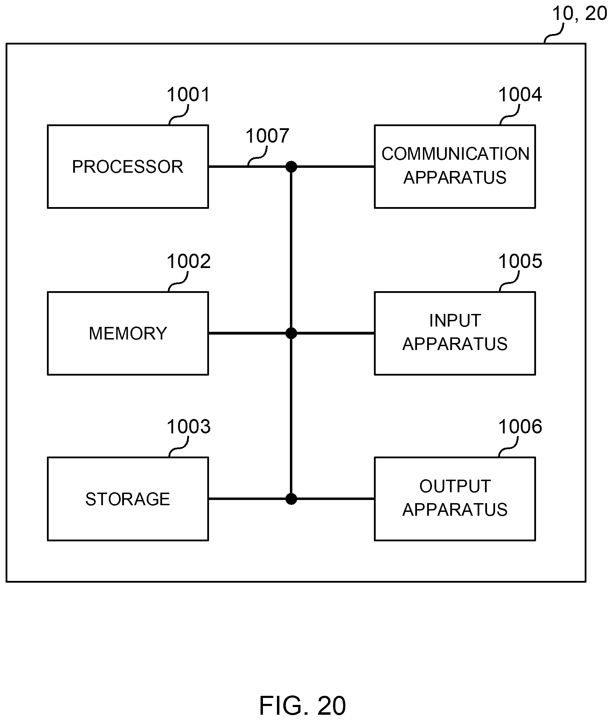

For example, the radio base station and the user terminal according to the one embodiment of the present disclosure may function as computers that perform processing of the radio communication method according to the present disclosure. Fig. 20 is a diagram illustrating one example of the hardware configurations of the radio base station and the user terminal according to the one embodiment. The above-described radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 20 or may be configured without including part of the apparatuses.

For example, Fig. 20 illustrates the only one processor 1001. However, there may be a plurality of processors. Furthermore, processing may be executed by 1 processor or processing may be executed by 1 or more processors concurrently or successively or by using another method. In addition, the processor 1001 may be implemented by 1 or more chips.

Each function of the radio base station 10 and the user terminal 20 is realized by, for example, causing hardware such as the processor 1001 and the memory 1002 to read given software (program), and thereby causing the processor 1001 to perform an operation, and control communication via the communication apparatus 1004 and control reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above-described embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via wired and/or radio networks, and will be also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above-described transmission/reception antennas 101 (201), amplifying sections 102 (202), transmission/reception sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or all of each function block. For example, the processor 1001 may be implemented by using at least one of these types of hardware.

### (Modified Example)

In addition, each term that has been described in this description and/or each term that is necessary to understand this description may be replaced with terms having identical or similar meanings. For example, a channel and/or a symbol may be signals (signalings). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed duration (e.g., 1 ms) that does not depend on the numerologies.

Furthermore, the slot may include one or a plurality of symbols (Orthogonal Frequency Division Multiplexing (OFDM) symbols or Single Carrier-Frequency Division Multiple Access (SC-FDMA) symbols) in the time domain. Furthermore, the slot may be a time unit based on the numerologies. Furthermore, the slot may include a plurality of mini slots. Each mini slot may include one or a plurality of symbols in the time domain. Furthermore, the mini slot may be referred to as a subslot.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling for radio communication. For example, in the LTE system, the radio base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block and/or codeword, or may be a processing unit of scheduling or link adaptation. In addition, when the TTI is given, a time period (e.g., the number of symbols) in which a transport block, a code block and/or a codeword are actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe, a short subframe, a mini slot or a subslot.

In addition, the long TTI (e.g., the general TTI or the subframe) may be read as a TTI having a duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. Furthermore, the RB may include one or a plurality of symbols in the time domain or may have the length of 1 slot, 1 mini slot, 1 subframe or 1 TTI. 1 TTI or 1 subframe may each include one or a plurality of resource blocks. In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and parameters described in this description may be expressed by using absolute values, may be expressed by using relative values with respect to given values or may be expressed by using other corresponding information. For example, a radio resource may be instructed by a given index.

Names used for parameters in this description are in no respect restrictive names. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by using a management table. The information and signals to be input and output can be overwritten, updated or additionally written. The output information and signals may be deleted. The input information and signals may be transmitted to other apparatuses.

Notification of information is not limited to the aspect/embodiment described in this description and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be performed implicitly (by, for example, not notifying the given information or by notifying another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSLs)) and/or radio techniques (e.g., infrared rays and microwaves), these wired techniques and/or radio techniques are included in a definition of the transmission media.

The terms "system" and "network" used in this description are interchangeably used.

In this description, the terms "Base Station (BS)", "radio base station", "eNB", "gNB", "cell", "sector", "cell group", "carrier" and "component carrier" can be interchangeably used. The base station will be also referred to as a term such as a fixed station, a NodeB, an eNodeB (eNB), an access point, a transmission point, a reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of the base station and/or the base station subsystem that provide communication service in this coverage.

In this description, the terms "Mobile Station (MS)", "user terminal", "User Equipment (UE)" and "terminal" can be interchangeably used.

The mobile station will be also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

Furthermore, the radio base station in this description may be read as the user terminal. For example, each aspect/embodiment of the present disclosure may be applied to a configuration where communication between the radio base station and the user terminal is replaced with communication between a plurality of user terminals (D2D: Device-to-Device). In this case, the user terminal 20 may be configured to include the functions of the above-described radio base station 10. Furthermore, words such as "uplink" and "downlink" may be read as a "side". For example, the uplink channel may be read as a side channel.

Similarly, the user terminal in this description may be read as the radio base station. In this case, the radio base station 10 may be configured to include the functions of the above-described user terminal 20.

In this description, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of the physical and logical connections. For example, "connection" may be read as "access".

It can be understood in this description that, when connected, the two elements are "connected" or "coupled" with each other by using 1 or more electric wires, cables and/or printed electrical connection, and by using electromagnetic energy having wavelengths in radio frequency domains, microwave domains and/or (both of visible and invisible) light domains in some non-restrictive and non-comprehensive examples.

A sentence that "A and B are different" in this description may mean that "A and B are different from each other". Words such as "separate" and "coupled" may be also interpreted in a similar manner.

When the words "including" and "comprising" and modifications of these words are used in this description or the claims, these words intend to be comprehensive similar to the word "having". Furthermore, the word "or" used in this description or the claims intends not to be an exclusive OR.

The present invention has been described in detail above. However, it is obvious for a person skilled in the art that the present invention is not limited to the embodiment described in this description. The present invention can be carried out as modified and changed aspects without departing from the gist and the scope of the present invention defined based on the recitation of the claims. Accordingly, the disclosure of this description is intended for exemplary explanation, and does not bring any restrictive meaning to the present invention.

## Claims

1. A user terminal comprising:
a reception section that receives a downlink control channel; and
a control section that controls monitoring of the downlink control channel by using a periodicity and an offset of a start timing associated with a subcarrier spacing.

2. The user terminal according to claim 1, wherein the control section controls the monitoring by using at least one of an offset in a slot unit, an offset in a symbol unit and a duration of the monitoring associated with the subcarrier spacing.

3. The user terminal according to claim 1 or 2, wherein the control section determines a periodicity and an offset of monitoring of a first downlink control channel that is specific to the user terminal, and determines a periodicity and an offset of monitoring of a second downlink control channel that is common to a user terminal group.

4. The user terminal according to claim 1 or 2, wherein the control section determines a periodicity and an offset used for both of monitoring of a first downlink control channel that is specific to the user terminal, and a second downlink control channel that is common to a user terminal group.

5. The user terminal according to claim 3 or 4, wherein
a plurality of sets each including a periodicity and an offset are configured in advance to the control section, and
the control section controls monitoring of at least one of the first downlink control channel and the second downlink control channel by using one of the plurality of parameter sets.

6. A radio communication method of a user terminal comprising:
receiving a downlink control channel; and
controlling monitoring of the downlink control channel by using a periodicity and an offset of a start timing associated with a subcarrier spacing.
